# EUROPÄISCHE PATENTSCHRIFT

(11) **EP 1 817 186 B1**
(45) Veröffentlichungstag und Bekanntmachung des Hinweises auf die Patenterteilung: **02.07.2008**
(21) Anmeldenummer: 05746418.2
(22) Anmeldetag: 27.05.2005
(51) Int. Cl.: B60G 21/055, F16D 1/06

(54) **VERFAHREN ZUM BEFESTIGEN VON FIXIERRINGEN AUF STABILISATOREN FÜR KRAFTFAHRZEUGE**
PROCESS FOR SECURING FIXING RINGS TO STABILISERS FOR MOTOR VEHICLES
PROCEDE POUR FIXER DES ANNEAUX DE FIXATION SUR DES STABILISATEURS POUR VEHICULES AUTOMOBILES

(30) Priorität: 29.06.2004 DE 102004031282
(43) Veröffentlichungstag der Anmeldung: 15.08.2007
(73) Patentinhaber: ThyssenKrupp Technologies AG, 45128 Essen (DE)
(72) Erfinder: DZIEMBALLA, Hans, 58642 Iserlohn (DE); MERTENS, Udo, 58802 Balve (DE)
(74) Vertreter: Adams, Steffen
(86) Internationale Anmeldenummer: PCT/EP2005/005692
(87) Internationale Veröffentlichungsnummer: WO 2006/000281

(56) Entgegenhaltungen:
- EP-A- 0 405 109
- EP-A- 1 522 433
- EP-B- 0 460 148
- DE-A1- 10 321 716
- US-B1- 6 685 381
- PATENT ABSTRACTS OF JAPAN Bd. 2002, Nr. 06, 4. Juni 2002 (2002-06-04) -& JP 2002 046444 A (MAZDA MOTOR CORP), 12. Februar 2002 (2002-02-12)
- PATENT ABSTRACTS OF JAPAN Bd. 2002, Nr. 06, 4. Juni 2002 (2002-06-04) -& JP 2002 046443 A (MAZDA MOTOR CORP), 12. Februar 2002 (2002-02-12)
- PATENT ABSTRACTS OF JAPAN Bd. 2002, Nr. 06, 4. Juni 2002 (2002-06-04) -& JP 2002 046442 A (MAZDA MOTOR CORP), 12. Februar 2002 (2002-02-12)
- PATENT ABSTRACTS OF JAPAN Bd. 1998, Nr. 12, 31. Oktober 1998 (1998-10-31) -& JP 10 193944 A (CHUO SPRING CO LTD), 28. Juli 1998 (1998-07-28)

## Beschreibung

Die Erfindung betrifft ein Verfahren gemäß dem Oberbegriff des Patentanspruchs 1.

Aus dem Stand der Technik sind verschiedene Verfahren bekannt, mit denen die Fixierringe, die zur axialen Fixierung der Befestigungslager von Stabilisatoren für Kraftfahrzeuge dienen, auf den Stabilisatoren befestigt werden. So ist es beispielsweise bekannt, die Fixierringe als geteilte Ringe auszubilden, die auf den Stabilisator aufgeklemmt werden und deren Hälften dann mittels Punktverschweißung miteinander verbunden werden. Die Innenfläche dieser Ringe ist gerändelt, sodass sich zwischen den Ringhälften und dem Stabilisator eine formschlüssige Verbindung bildet. Aufgrund des erforderlichen Schweißvorgangs und der erforderlichen Rändelung der Innenfläche ist dieses Befestigungsverfahren vergleichsweise aufwändig.

Aus der EP 0 460 148 B1 ist es bekannt, die Fixierringe aus Kautschuk und Kunststoff auszubilden und diese auf den Stabilisator aufzuformen. Die auf diese Weise erzielbaren Festigkeiten der Verbindung zwischen Fixierring und Stabilisator sind begrenzt.

Weitere relevante, gemäß dem Oberbegriff des Anspruchs 1, fixieringe sind aus jedem dem Documenten EP 1522433, US 6685381, JP 10193944 und JP 2002046444 bekannt.

Schließlich ist aus der Praxis ein Verfahren mit den Merkmalen des Oberbegriffs des Patentanspruchs 1 bekannt. Bei diesem bekannten Verfahren werden die die plastische Verformung des Fixierrings bewirkenden Verformungskräfte so in den Fixierring eingebracht, dass sie über den Fixierring direkt auf den Stabilisator einwirken. Dies hat den Nachteil, dass die Oberfläche des Stabilisators verletzt werden kann. Die Verletzungen der Oberfläche können eine unerwünschte Kerbwirkung verursachen, die zu einer Verringerung der Lebensdauer des dynamisch beanspruchten Stabilisators führt. Soweit der Stabilisator vor dem Aufbringen des Fixierrings bereits lackiert worden ist, führt die Verletzung der Oberfläche bei dem aus der Praxis bekannten Verfahren häufig zu einer Beschädigung der Lackschicht, sodass es zu einer so genannten Unterrostung im Bereich des Fixierringes kommt.

Der Erfindung liegt die Aufgabe zugrunde, ein Verfahren gemäß dem Oberbegriff des Patentanspruchs 1 derart weiterzubilden, dass keine Verletzung der Oberfläche des Stabilisators mehr auftritt.

Diese Aufgabe wird mit einem Verfahren gemäß Patentanspruch 1 gelöst. In den Patentansprüchen 2 bis 8 sind vorteilhafte Weiterbildungen des Verfahrens beschrieben.

Erfindungsgemäß ist vorgesehen, dass die Innenfläche des Fixierrings in der Befestigungsposition mindestens einen Abschnitt aufweist, der nicht am Stabilisator anliegt. Die Erfindung nutzt die Erkenntnis aus, dass es möglich ist, in den Fixierring die die plastische Verformung des Fixierrings bewirkenden Verformungskräfte im Bereich des nicht anliegenden Abschnittes in den Fixierring derart einzubringen, dass die Verformungskräfte nicht direkt auf den Stabilisator übertragen werden. Auf diese Weise wird eine Verletzung der Oberfläche des Stabilisators wirksam verhindert.

Bei der erfindungsgemäßen Verfahrensweise werden in dem Bereich des Fixierrings, der am Stabilisator anliegt, im Wesentlichen Zugspannungen erzeugt, da die plastische Verformung des Fixierrings in den nicht am Stabilisator anliegenden Abschnitten einen Materialfluss in den am Stabilisator anliegenden Bereichen des Fixierrings induziert. Die durch diesen Materialfluss entstehenden Zugspannungen übertragen auf den Stabilisator Kräfte, die überraschenderweise keine Verletzung der Oberfläche des Stabilisators bewirken. Gleichzeitig werden jedoch hohe, in jedem Fall aber für den Anwendungsfall ausreichend hohe Festigkeiten der kraftschlüssigen Verbindung zwischen Fixierring und Stabilisator erreicht.

Eine besonders gute und hohe Festigkeit der kraftschlüssigen Verbindung wird erreicht, wenn die Innenkontur des Fixierrings im Wesentlichen ellipsenförmig ausgebildet ist, sodass die Innenfläche des Fixierrings in zwei sich gegenüber liegenden Abschnitten nicht am Stabilisator anliegt. Auf diese Weise können die Verformungskräfte sozusagen symmetrisch in den beiden nicht anliegenden Abschnitten in den Fixierring eingebracht werden. Dadurch können in dem am Stabilisator anliegenden Bereich des Fixierrings relativ hohe Zugkräfte bei vergleichsweise geringen plastischen Verformungen des Fixierrings in den nicht am Stabilisator anliegenden Bereichen erreicht werden. Da in der Praxis die Fixierringe erst montiert werden, wenn die Stabilisatorenden bereits ihre abgeflachten Anbindungspunkte aufweisen, kommt diese elliptische Form der Innenkontur des Fixierrings dieser Tatsache entgegen. Die Fixierringe können auf einfache Weise über die abgeflachten Anbindungspunkte an den Enden des Stabilisators auf diesen aufgeschoben werden.

Um die Verformungswerkzeuge, mit denen die Verformungskräfte in den Fixierring eingebracht werden, besser ansetzen zu können, ist es vorteilhaft, wenn die Außenfläche des Fixierrings im Bereich des nicht anliegenden Abschnitts bzw. der nicht anliegenden Abschnitte Einformungen aufweist, in die die Verformungswerkzeuge eingreifen bzw. an denen diese Werkzeuge ansetzen können. Die für das erfindungsgemäße Verfahren verwendeten Verformungswerkzeuge sind vorzugsweise Presswerkzeuge, wie sie in herkömmlichen Pressen verwendet werden.

Der Fixierring kann aus einem Stahlwerkstoff bestehen. In diesem Fall ist es kostengünstig, wenn der Fixierring als Stanzteil ausgebildet ist. Gleichwohl ist es auch möglich, den Fixierring als Abschnitt eines Stahlprofils auszubilden.

Der Fixierring kann jedoch auch aus Leichtmetall bestehen. Für diese Zwecke geeignete Leichtmetalle sind beispielsweise Aluminium, Titan oder Magnesium bzw. deren Legierungen. Auch Kupfer ist ein geeigneter Werkstoff für die Fixierringe. Im Fall von Leichtmetall oder Kupfer als Werkstoff für die Fixierringe bietet es sich aus Kostengründen an, die Fixierringe als Abschnitte von Strangpressprofilen auszubilden.

Bestehen die Fixierringe aus Leichtmetall oder Kupfer, so bietet sich die besonders vorteilhafte Möglichkeit, die Fixierringe erst auf den Stabilisator aufzubringen, nachdem dieser lackiert worden ist. Überraschenderweise hat sich gezeigt, dass bei Verwendung von Leichtmetall oder Kupfer als Werkstoff für die Fixierringe die mit dem erfindungsgemäßen Verfahren in den Fixierring eingebrachten Kräfte nicht zu einer Beschädigung der lackierten Oberfläche des Stabilisators führen. Da somit die Lackierung unverletzt erhalten bleibt, wird eine Unterrostung des Fixierrings wirksam verhindert. Da das Problem der Unterrostung in dem in Rede stehenden Anwendungsfall seit Jahren eine Schwierigkeit darstellt, bietet das erfindungsgemäße Verfahren somit eine wertvolle Lösung für dieses Problem. Die unerwünschte Unterrostung der Fixierringe von Stabilisatoren hat in der Praxis teilweise zu vorzeitigem Bauteilversagen der Stabilisatoren geführt. Dies kann mit der Erfindung nun wirksam vermieden werden.

Im Folgenden wird die Erfindung anhand einer Zeichnung näher beschrieben. Es zeigen im Einzelnen:
- Fig. 1:: einen im Bereich der Befestigungsposition des Fixierrings geschnittenen Stabilisator mit kraftschlüssig mit diesem verbundenem Fixierring;
- Fig. 2:: eine perspektivische Ansicht des Fixierrings vor seiner plastischen Verformung (Rohling).

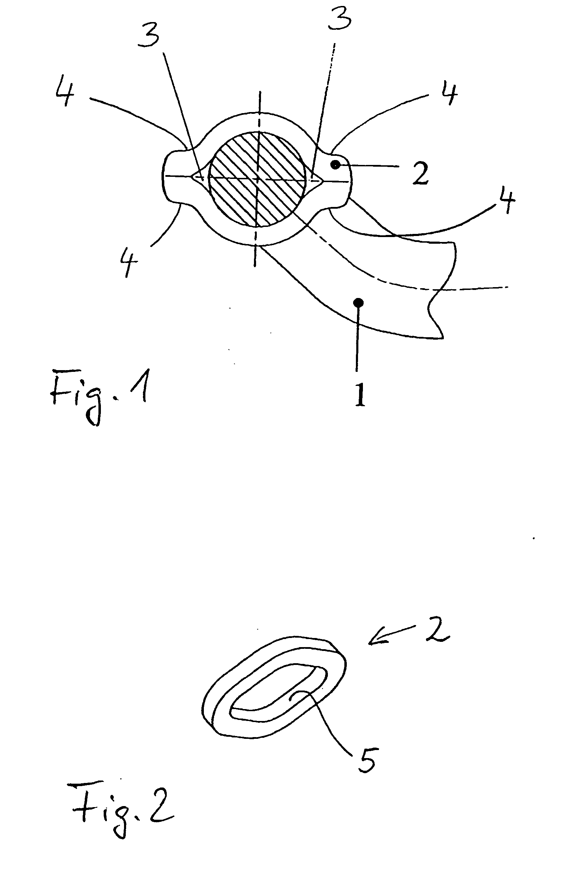

In Fig. 1 ist der auf den Stabilisator 1 aufgebrachte Fixierring 2 in Ansicht dargestellt. Die Abschnitte der Innenfläche 5 des Fixierrings 2, die in der Befestigungsposition nicht an dem Stabilisator anliegen, sind in Fig. 1 mit der Bezugsziffer 3 bezeichnet. Bei dem erfindungsgemäßen Verfahren werden die Verformungskräfte über die von dem Stabilisator 1 beabstandeten Bereiche des Fixierringes 2 in diesen eingebracht. Dadurch wird erreicht, dass die plastische Verformung des Fixierrings 2 im Wesentlichen in diesen Bereichen stattfindet, während in dem Bereich des Fixierrings 2, der mit dem Stabilisator 1 in unmittelbarem Kontakt steht und an diesem anliegt, lediglich Zugspannungen erzeugt werden. Diese Zugspannungen entstehen aufgrund des Materialflusses, der in den am Stabilisator 1 anliegenden Abschnitten des Fixierrings 2 durch dessen plastische Verformung induziert wird. Auf diese Weise wird erreicht, dass die Verformungskräfte nicht unmittelbar über den Fixierring 2 auf den Stabilisator 1 einwirken, sondern dass nur mittelbar über die mit dem Stabilisator 1 in Kontakt stehenden Abschnitte des Fixierrings 2 Kräfte auf den Stabilisator 1 übertragen werden. So gelingt es, die Oberfläche des Stabilisators 1 unverletzt zu erhalten, jedoch gleichzeitig eine kraftschlüssige Verbindung mit ausreichender Festigkeit zu erreichen.

In Fig. 2 ist ein Fixierring 2 in perspektivischer Darstellung gezeigt, der nach einer bevorzugten Ausführungsform der Erfindung eine Innenkontur aufweist, die im Wesentlichen ellipsenförmig ausgebildet ist. Auf diese Weise sind zwei sich gegenüber liegende Abschnitte der Innenfläche 5 des Fixierrings 2 vorhanden, die nicht am Stabilisator anliegen, nachdem der Fixierring auf den Stabilisator aufgeschoben worden ist.

### Bezugszeichenliste

- 1.: Stabilisator
- 2.: Fixierring
- 3.: Abschnitt
- 4.: Einformung
- 5.: Innenfläche

## Patentansprüche

1. Verfahren zum kraftschlüssigen Verbinden von einteiligen Fixierringen (2) aus Metall mit einem Stabilisator (1) für Kraftfahrzeuge, bei welchem Verfahren die Fixierringe (2) über die Enden des Stabilisators (1) auf diesen aufgeschoben, in ihrer Befestigungsposition positioniert und dann durch plastische Verformung des Fixierrings (2) mit dem Stabilisator (1) kraftschlüssig verbunden werden, wobei die Innenfläche (5) des Fixierrings in der Befestigungsposition in mindestens einem Abschnitt (3) nicht am Stabilisator anliegt, und wobei die die plastische Verformung des Fixierrings (2) bewirkenden Verformungskräfte im Bereich dieses nicht anliegenden Abschnitts (3) in den Fixierring (2) eingebracht werden, **dadurch gekennzeichnet, dass** die Außenfläche des Fixierrings (2) im Bereich des nicht anliegenden Abschnitts (3) Einformungen (4) aufweist, die Ansatzpunkte für die Verformungswerkzeuge bilden.

2. Verfahren nach Anspruch 1, **dadurch gekennzeichnet, dass** die Innenkontur des Fixierrings (2) im Wesentlichen ellipsenförmig ausgebildet ist, sodass die Innenfläche (5) des Fixierrings (2) in seiner Befestigungsposition in zwei sich gegenüber liegenden Abschnitten (3) nicht am Stabilisator anliegt, und dass die Verformungskräfte im Bereich dieser beiden nicht anliegenden Abschnitte (3) in den Fixierring (2) eingebracht werden.

3. Verfahren nach einem der voranstehenden Ansprüche, **dadurch gekennzeichnet, dass** die Verformung des Fixierrings (2) in einer Presse erfolgt.

4. Verfahren nach einem der voranstehenden Ansprüche, **dadurch gekennzeichnet, dass** der Fixierring (2) aus Stahl besteht.

5. Verfahren nach einem der voranstehenden Ansprüche, **dadurch gekennzeichnet, dass** der Fixierring (2) ein Stanzteil ist.

6. Verfahren nach einem der Ansprüche 1 bis 4, **dadurch gekennzeichnet, dass** der Fixierring (2) aus Leichtmetall oder Kupfer besteht.

7. Verfahren nach Anspruch 7, **dadurch gekennzeichnet, dass** der Fixierring (2) als Abschnitt eines Profils, insbesondere eines Strangpressprofils ausgebildet ist.

8. Verfahren nach Anspruch 7 oder 8, **dadurch gekennzeichnet, dass** der Fixierring (2) auf den bereits lackierten Stabilisator (1) aufgeschoben und mit diesem kraftschlüssig verbunden wird.

9. Stabilisator (1) für Kraftfahrzeuge mit mindestens einem Fixierring (2), der durch plastische Verformung kraftschlüssig mit dem Stabilisator verbunden ist, wobei die Innenfläche (5) des Fixierrings (2) mindestens einen Abschnitt (3) aufweist, der nicht an der Stabilisatoroberfläche anliegt, und dass die Außenfläche des Fixierrings (2) ausschließlich im Bereich des nicht anliegenden Abschnitts (3) Deformationen aufweist, die durch die plastische Verformung des Fixierrings (2) in diesem Bereich entstanden sind, **dadurch gekennzeichnet, dass** die Außenfläche des Fixierrings (2) im Bereich des nicht anliegenden Abschnitts (3) Einformungen (4) aufweist, die Ansatzpunkte für Verformungswerkzeuge bilden.

## Claims

1. Method for connecting in a non-positive manner single-piece fixing rings (2) consisting of metal to a stabiliser (1) for motor vehicles, in which method the fixing rings (2) are slid onto the stabiliser (1) over the ends thereof, are positioned in their attachment position and are then connected in a non-positive manner to the stabiliser (1) by plastically deforming the fixing ring (2), wherein the inner surface (5) of the fixing ring does not lie against the stabiliser in at least one portion (3) in the attachment position, and wherein the deformation forces effecting the plastic deformation of the fixing ring (2) are introduced into the fixing ring (2) in the region of this non-abutting portion (3), **characterised in that** the outer surface of the fixing ring (2) has formed-in portions (4) in the region of the non-abutting portion (3) which form starting points for the deforming tools.

2. Method as claimed in Claim 1, **characterised in that** the inner contour of the fixing ring (2) is formed so as to be substantially ellipsoidal so that the inner surface (5) of the fixing ring (2) does not lie against the stabiliser in two opposite portions (3) in its attachment position, and **in that** the deformation forces are introduced into the fixing ring (2) in the region of these two non-abutting portions (3).

3. Method as claimed in any one of the preceding Claims, **characterised in that** the fixing ring (2) is deformed in a press.

4. Method as claimed in any one of the preceding Claims, **characterised in that** the fixing ring (2) consists of steel.

5. Method as claimed in any one of the preceding Claims, **characterised in that** the fixing ring (2) is a stamping part.

6. Method as claimed in any one of Claims 1 to 4, **characterised in that** the fixing ring (2) consists of light metal or copper.

7. Method as claimed in Claim 7 [*sic*]*,* **characterised in that** the fixing ring (2) is formed as a portion of a profiled part, in particular an extruded section.

8. Method as claimed in Claim 7 or 8, **characterised in that** the fixing ring (2) is slid onto the already coated stabiliser (1) and is connected thereto in a non-positive manner.

9. Stabiliser (1) for motor vehicles having at least one fixing ring (2) which is connected in a non-positive manner to the stabiliser by means of plastic deformation, wherein the inner surface (5) of the fixing ring (2) comprises at least one portion (3) which does not lie against the stabiliser surface, and in that the outer surface of the fixing ring (2) has deformations only in the region of the non-abutting portion (3) which are produced by means of the plastic deformation of the fixing ring (2) in this region, **characterised in that** the outer surface of the fixing ring (2) has formed-in portions (4) in the region of the non-abutting portion (3) which form starting points for the deforming tools.

## Revendications

1. Procédé pour assembler par frottement des anneaux de fixation (2) d'une pièce, en métal, à un stabilisateur (1) pour véhicules automobiles, dans lequel les anneaux de fixation (2) sont amenés dans leur position de fixation sur le stabilisateur (1) en passant par les extrémités de celui-ci, et sont ensuite assemblés par frottement à celui-ci, par déformation plastique de l'anneau de fixation (2), la face interne (5) de l'anneau de fixation en position de fixation n'étant pas en contact avec le stabilisateur dans au moins une section (3), et les forces de déformation produisant la déformation plastique de l'anneau de fixation (2) étant appliquées à l'anneau de fixation (2) dans la région de cette section (3) non en contact, **caractérisé en ce que** la face externe de l'anneau de fixation (2) présente dans la région de la section (3) non en contact des déformations (4) qui forment des points de prise pour les outils de déformation.

2. Procédé selon la revendication 1, **caractérisé en ce que** le contour interne de l'anneau de fixation (2) est réalisé essentiellement en forme d'ellipse, de telle sorte que la face interne (5) de l'anneau de fixation (2) dans sa position de fixation n'est pas en contact avec le stabilisateur dans deux sections (3) opposées l'une à l'autre, et **en ce que** les forces de déformation sont appliquées à l'anneau de fixation (2) dans la région de ces deux sections (3) non en contact.

3. Procédé selon l'une des revendications précédentes, **caractérisé en ce que** la déformation de l'anneau de fixation (2) se fait dans une presse.

4. Procédé selon l'une des revendications précédentes, **caractérisé en ce que** l'anneau de fixation (2) est en acier.

5. Procédé selon l'une des revendications précédentes, **caractérisé en ce que** l'anneau de fixation (2) est une pièce emboutie.

6. Procédé selon l'une des revendications 1 à 4, **caractérisé en ce que** l'anneau de fixation (2) est en métal léger ou en cuivre.

7. Procédé selon la revendication 7, **caractérisé en ce que** l'anneau de fixation (2) est réalisé sous la forme d'une section d'un profilé, en particulier un profilé extrudé.

8. Procédé selon la revendication 7 ou 8, **caractérisé en ce que** l'anneau de fixation (2) est placé sur le stabilisateur (1) déjà laqué, et est assemblé par frottement à celui-ci.

9. Stabilisateur (1) pour véhicules automobiles, avec au moins un anneau de fixation (2) qui est assemblé par frottement au stabilisateur, par déformation plastique, la face interne (5) de l'anneau de fixation (2) présentant au moins une section (3) qui n'est pas en contact avec la face externe du stabilisateur, et la face externe de l'anneau de fixation (2) présentant exclusivement dans la région de la section (3) non en contact, des déformations qui sont apportées dans cette région par la déformation plastique de l'anneau de fixation (2), **caractérisé en ce que** la face externe de l'anneau de fixation (2) présente dans la région de la section (3) non en contact des déformations (4) qui servent de points de prise pour des outils de déformation.
